# FASCICULE DE BREVET EUROPEEN

(11) **EP 0 495 327 B1**
(45) Date de publication et mention de la délivrance du brevet: **19.08.1998**
(21) Numéro de dépôt: 91430028.0
(22) Date de dépôt: 17.12.1991
(51) Int. Cl.: C04B 35/65, C04B 35/66, F27D 1/16

(54) **Procédé et composition pour la réparation par soudage sur site de produits réfractaires**
Verfahren und Zusammenseztung zum in-situ Ausbessern von feuerfesten Formkörpern durch Schweissen
Process and composition for repairing of refractories by in-situ soldering

(30) Priorité: 18.12.1990 FR 9016373
(43) Date de publication de la demande: 22.07.1992
(73) Titulaire: Duval, Albert, F-13260 Carry le Rouet (FR)
(72) Inventeur: Duval, Albert, F-13260 Carry le Rouet (FR)
(74) Mandataire: Somnier, Jean-Louis

(56) Documents cités:
- FR-A- 2 516 915
- GB-A- 2 170 191
- GB-A- 2 190 671
- GB-A- 2 213 812

## Description

La présente invention a pour objet des compositions pour la réparation par soudage sur site de produits réfractaires.

Le secteur technique de l'invention est celui de matériaux réfractaires.

Une des applications principales de l'invention est la réparation de fours dans les industries lourdes, telles que la métallurgie, les cimenteries, les aciéries et la pétrochimie.

Il est connu, en effet, qu'au bout d'un certain nombre de journées de fonctionnement, les fours utilisés donc intensément dans ces industries, nécessitent d'être réparés, principalement à cause de fissures se produisant dans leur garniture intérieure en produits réfractaires, ou à cause de détérioration de la surface de ces produits.

Différents procédés, produits et dispositifs ont été développés pour répondre à ce problème, et comme quand une solution de réparation donne satisfaction, elle peut être utilisée pour réaliser également des constructions neuves et réciproquement, on peut relever beaucoup de techniques, dont plus d'une centaine ont fait l'objet de demandes de brevets en FRANCE depuis moins de vingt ans dans ce domaine.

Ainsi, on peut citer à titre d'exemple de procédé celui de "gunitage à travers une flamme avec mise en place de deux couches de produits de densité différente", qui a été déposé le 21 septembre 1984 sous le N° FR. 2.570.811 par l'INSTITUT DE RECHERCHES DE LA SIDERURGIE FRANCAISE IRSID : suivant ce procédé, on met en place deux couches superposées, la seconde ayant une densité plus forte que la première, de manière à favoriser l'adhérence de la première couche au revêtement et la résistance de la seconde couche aux agressions chimiques et mécaniques.

Un autre procédé déposé par la société GLAVERBEL le 13 février 1984 sous le N° FR. 2.541.440 concerne le rechargement d'une structure réfractaire dans une ambiance de travail dont la température est supérieure à 600°C : l'opération est réalisée au moyen de briques de silice, qui sont fixées en place par projection d'un mélange de particules de matières réfractaires et de particules oxydables, dont la combustion forme une masse réfractaire cohérente, qui réalise cette fixation.

Dans la catégorie des produits, on relève également diverses demandes de brevets telles qu'une "composition réfractaire en deux parties à appliquer au pistolet", déposée par la société SHINAGAWA REFRACTORIES CO LTD sous priorité d'une demande japonaise sous le N° FR. 2.572.069 déposée le 21 octobre 1985 : ce document enseigne des poudres fines d'agrégats réfractaires et des poudres réfractaires super fines, préalablement mises sous la forme d'une bouillie contenant un défloculant.

On note également la demande de brevet déposée par la société MORGAN REFRACTORIES LIMITED en ANGLETERRE sous le N° GB 8.223.995 du 20 Août 1982 et concernant une composition pour la cuisson in situ pour former un garnissage réfractaire, comprenant un agrégat et un liant argileux tel que la composition contient jusqu'à 0,1 % en poids de substance hydrolytique et jusqu'à 0,1 % en poids de fibres organiques courtes.

La demande de brevet européenne de la société autrichienne STERREICHISCH-AMERIKANISCHE MAGNESIT AKTIENGESELLSCHAFT déposée le 30 juillet 1981 sous le N° EP 81890134 décrit une masse isolante réfractaire à pulvériser sans amiante à base de matériaux réfractaires basiques composés de 75 à 95 % en poids de magnésie, de magnésite-chrome, de chrome magnésite, d'olivine ou de fostérite, en tant que matériaux réfractaires de 3 à 20 % en poids de perlite expansée, et de 0.5 à 5 % en poids de liant, et de 0,5 à 5 % en poids d'agents plastifiants.

On peut enfin citer à titre d'exemple, la demande de brevet de la SOCIETE EUROPEENNE DES PRODUITS REFRACTAIRES déposée le 21 mars 1978 sous le N° FR. 78/08.143 et décrivant des compositions réfractaires utiles pour la préparation de pâtes injectables comprenant des constituants de 30 à 60 % en poids d'une fraction constituée de grains dont plus de 50 % sont supérieurs à 0.5 mm, et les plus gros grammes ne dépassant pas 10 mm et de 10 à 30 % en poids d'une fraction fine constituée de particules dont au moins 50 % sont inférieures à 75 microns et 10 à 30 % en poids d'une fraction très fine constituée de particules dont au moins 50 % sont inférieures à 5 microns ; les premières et troisièmes fractions ci-dessus étant formées de matière minérales d'origine naturelle ou synthétique, inerte vis-à-vis de l'eau. Des procédés de formation de masses réfractaires sont connus de FR-A-2 516 915 et GB-A-2 170 191.

On peut citer aussi bien d'autres demandes de brevet sur les composants de produits réfractaires destinés à la construction et/ou à la réparation, mais en ce qui concerne ceux utilisables dans la réparation, il est connu que quel que soit leur procédé de mise en oeuvre, il s'agit essentiellement de réparation par collage de matériaux d'apport sur la surface à réparer ou dans la fissure à combler. De plus, dans la plupart des cas, leur application nécessite, afin d'obtenir cependant un accrochage et une efficacité de réparation satisfaisante, d'arrêter les fours : ceci n'est pas satisfaisant, d'une part sur le plan économique, car l'arrêt et le redémarrage d'un four prend beaucoup de temps, et d'autre part sur le plan technique, car le résultat obtenu n'a pas de garantie suffisante et peut demander des réparations successives.

Le problème posé est donc de pouvoir obtenir une composition de produits permettant de souder sur site des produits réfractaires et cela sans avoir à arrêter les fours, grâce à tout moyen ensuite adapté à la mise en oeuvre et à la projection de cette composition.

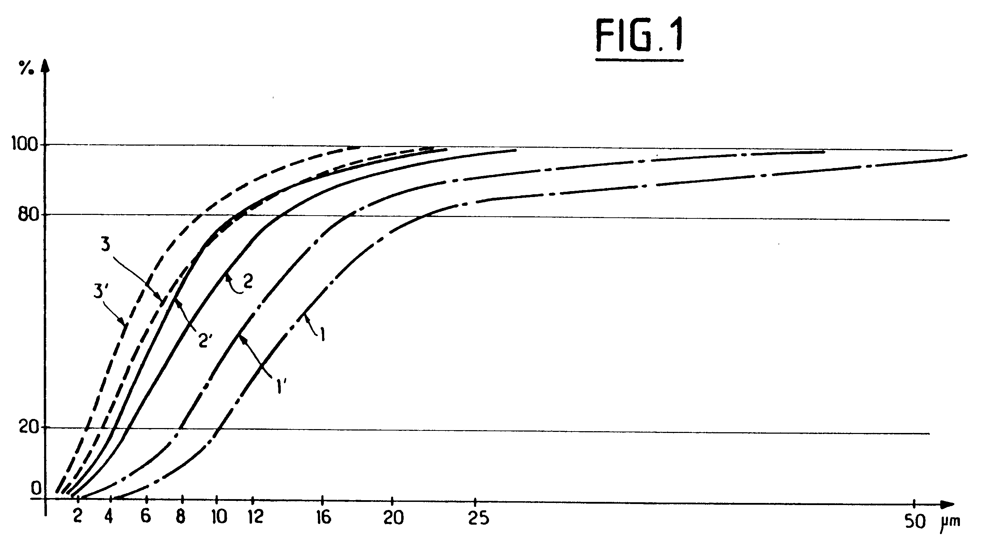

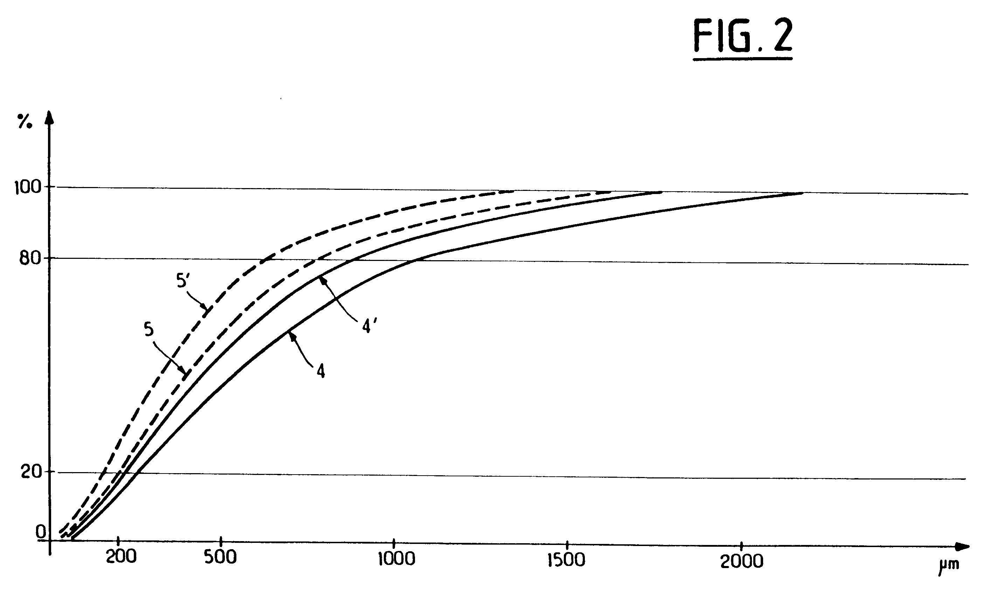

Une solution au problème posé est une composition selon le libellé de la revendication 4, une composition selon le libellé de la revendication 5 et une composition selon le libellé de la revendication 6. Un objet de la présente invention sont aussi les procédés des revendications 1 à 3.
- les répartitions de granulométrie sont données préférentiellement dans les graphiques tels que représentés sur les figures 1 et 2 en limite minimum et maximum pour les produits oxydants et réfractaires.

Cette répartition de granulométrie donne les dimensions maximum des particules pour chaque produit figurant dans les compositions suivant l'invention en fonction du pourcentage acceptable de particules ayant une dimension au plus égale à cette dimension maximum.

En particulier, les particules de silicium toujours nécessaires dans lesdites compositions, respectent préférentiellement une répartition de granulométrie comprise entre deux courbes maximum 3 et minimum 3′ représentées figure 1, tel que pour un pourcentage de 20 % de l'ensemble de ces particules, leur section maximum est comprise entre environ 2,2 et 3,2 microns, pour un pourcentage de 80 % leur section maximum est comprise entre environ 8,5 et 11 microns, et pour la totalité soit 100 % la section maximum des particules est comprise entre environ 18 et 23 microns.

De même, les autres particules d'aluminium figurant toujours également dans lesdites compositions suivant l'invention respectent préférentiellement une répartition de granulométrie comprise entre deux courbes maximum 2 et minimum 2′ représentées figure 1, tel que pour un pourcentage de 20 % de l'ensemble de ces particules, la section maximum est comprise entre 3,4 et 4,8 microns environ et pour un pourcentage de 80 % , entre 10,5 et 13,5 microns environ, et pour la totalité soit 100 % la section maximale des particules est comprise entre environ 22 et 28 microns.

Il en est de même pour les autres produits rentrant dans les compositions correspondant aux produits réfractaires que l'on veut souder et tels que définis ci-après. Ainsi, pour tous les composants oxydables réfractaires, on relève des courbes dites maximum et minimum délimitant une zone correspondant à des répartitions possibles de pourcentage en fonction de diamètres limites admissibles pour chaque composant. De préférence, les éléments des matières réfractaires doivent être recuits avant broyage, pour la constitution de la granulométrie.

Par ailleurs, les différents produits rentrant dans les compositions suivant l'invention, doivent répondre préférentiellement à une répartition en pourcentage du poids total de la composition et adaptée au type de produits à souder.

En particulier, toutes les compositions suivant l'invention peuvent comprendre, parmi les constituants réfractaires qui les composent des particules de magnésie : celles-ci représentent au moins environ 40 % pour un total de ladite composition pour des produits réfractaires à souder à base de matériaux de magnésie, et les limites indiqués dans les revendications dans tous les autres cas.

Pour des fours tels que de type de batterie à coke constitués de parois en produits réfractaires à base de silice, les constituants oxydables sont constitués, en rapport du poids total de la composition, de 10 à 18 % de particules de silicium métallique, de 1 à 5 % de particules d'aluminium métallique et de 1 à 10 % de particules de magnésie ; de même, pour de tels fours, lesdits constituants réfractaires sont constitués en rapport poids total de la composition de 1 à 5 % de particules d'alumine et le complément du pourcentage de ces constituants à hauteur d'au moins 70 % par des particules de silice.

A titre d'exemple, parmi les fourchettes données ci-dessus, on peut citer pour une dose conditionnée de 20 kilogrammes, une composition d'un mélange particulier pour constitution d'une masse de réfractaires pour réparation à chaud en basse température de ces fours, telle qu'elle comprend :
- 13,20 % ou 2,64 kilog. de particules de silicium,
- 1,8 % ou 0,360 kilog. de particules d'aluminium,
- 5 % ou 1 kilog. de particules de magnésie,
- 78 % ou 15,6 kilog. de particules de silice,
- 2 % ou 0,4 kilog. de particules de d'alumine.

D'autres compositions suivant l'invention sont définies telles que ci-après pour les fours à matériaux d'alumine et ceux à matériaux de magnésie.

Le résultat est de nouvelles compositions pour la réparation sur site de produits réfractaires, dont l'avantage principal est de pouvoir permettre le soudage de cesdits produits grâce à la projection de ladite composition, et cela d'autant mieux qu'on utilise un dispositif tel qu'un appareil ayant un réservoir, dans lequel est stocké ladite composition, compatible avec les éléments constituant les parois réfractaires à réparer, et une lance raccordée au réservoir et dans laquelle est entraînée ladite composition par un jet de gaz ; la composition est projetée puis enflammée à la sortie de ladite lance grâce à un apport d'oxygène.

Dans un mode préférentiel, ledit dispositif comporte tout moyen doseur , mécanique connu pour entraîner ladite composition de l'intérieur du réservoir dans une chambre dite d'entraînement, raccordée à celui-ci, et deux circuits d'alimentation à des pressions choisies et contrôlées grâce à tout moyen, en oxygène et en gaz complètement inerte, raccordés chacun d'une part audit réservoir et, d'autre part à ladite chambre ; ces circuits comportent chacun au moins un moyen connu de contrôle du débit de gaz et la chambre d'entraînement est reliée directement à la seule et unique dite lance. Le circuit en gaz inerte permet d'assurer un balayage de l'ensemble de l'installation en toute sécurité. De préférence, ledit dispositif est monté sur un chariot mobile comprenant un ensemble électronique de commande et de contrôle.

Les compositions définies ci-dessus et ci-après et utilisées suivant tout procédé, et dispositif adapté tel que résumé ci-avant, répondent donc au problème posé et permettent une réparation, avec tous les critères de fiabilité, par soudure et non par collage, comme cela se pratique jusqu'à présent.

De plus, ces compositions de produits peuvent permettre d'effectuer des travaux sur des fours pouvant conserver la même température de marche pendant les interventions que pendant leur marche normale, à condition bien sur d'utiliser des dispositifs de mise en oeuvre adaptés et disponibles par ailleurs : on peut alors souder, par exemple, des fissures.

Ainsi, il est possible d'intervenir dans tous les fours d'industries lourdes, tels que les fours de cokerie ; les fours convertisseurs, composès d'une cuve de stockage de la fonte ou de l'acier liquide, dans laquelle on rajoute les additifs et on épure l'ensemble ; les cuves de haut- fourneaux ; les fours "Cowper" comprenant les réchauffeurs de gaz de haut- fourneaux ; les fours de fusion, qui comprennent essentiellement les fours permettant la refonte de la matière, tel que l'aluminium essentiellement ; les fours à ciment ; les fours dits à cabines pour les raffineries et la pétrochimie...

Il est bien évident également que ces compositions suivant l'invention peuvent être utilisés pour le montage également de ces fours par soudage des blocs de produits réfractaires.

Les compositions comprenant différentes particules réfractaires et oxydables, telles que définies dans la présente invention, réagissent donc lors de leur projection, hors de la lance permettant leur apport sur l'endroit où l'on veut effectuer la réparation. exothermiquement avec l'oxygène, ce qui fait fondre les surfaces des parties réfractaires à traiter, avec une fusion complète des matières projetées. Les particules des constituants oxydables'sont donc fondues et amalgamées rapidement avec les autres produits en dégageant une masse importante de chaleur permettant la fusion d'ensemble et la soudure : elles forment elles-mêmes des oxydes réfractaires, qui sont très appropriés à leur application. Cependant, les limitations apportées par la présente invention sont importantes car, en cas d'excédent de ces matières oxydables, il y a risque de surchauffe sur les surfaces traitées, ce qui risque de détruire d'autres particules réfractaires aux alentours. De plus, les répartitions de granulométrie permettent par ailleurs, en particulier, un dégagement rapide de chaleur pendant la projection et la fusion du mélange. Les particules choisies pour ces différents mélanges ou compositions à projeter sont définies en fonction de leurs compositions chimiques similaires, avec un coefficient de dilatation thermique qui, s'il n'était pas suffisamment respecté, pourrait entraîner des écaillements ou des fissures après retrait à basse température : le choix des matières, des granulométries et des pourcentages de répartition dans les compositions sont donc importants pour respecter les résultats et les qualités de soudage qui sont les principaux avantages de la présente invention.

On pourrait citer d'autres avantages mais ceux cités ci-dessus en montrent déjà suffisamment pour en démontrer la nouveauté et l'intérêt et, la description et les figures ci-après représentent les limites des gammes de réalisation des compositions suivant l'invention : certaines répartitions de produits sont limitatives, mais d'autres exemples de répartitions pour des compositions données n'ont aucun caractère limitatif, d'autres répartitions sont possibles a partire des revendications qui précisent la portée et l'étendue de l'invention.

La figure 1 représente des répartitions en courbe de granulométrie des composants oxydables en limite maximum et minimum.

La figure 2 représente des courbes de granulométrie des composants réfractaires en limite minimum et maximum.

La figure 1 représente donc les courbes limites maximum et minimum de granulométrie des composants oxydables, tels que :
- pour les particules d'aluminium, la courbe 2 est dite de limite maximum et la courbe 2′ de limite minimum : toute composition selon l'invention doit donc comprendre des particules d'aluminium telles que pour toute analyse de granulométrie de ladite composition pour ces seules particules d'aluminium, on puisse tracer une courbe à partir de tous les points de cette analyse à l'intérieur de la surface comprise entre les courbes 2 et 2′.

Ainsi, par exemple, pour un pourcentage de 20 % de l'ensemble des particules d'aluminium d'une composition donnée, les sections maximum de celles-ci doivent être comprises entre environ 3,4 et 4,8 microns, et pour un pourcentage de 80 %, entre environ 10,5 et 13,5 microns.

Pour les particules de silicium, la courbe 3 est également dite de limite maximum et la courbe 3′ de limite minimum : toute composition suivant l'invention doit donc comprendre des particules de silicium telles que toute analyse de répartition de ces particules doit se situer à l'intérieur de la surface comprise entre les deux courbes. Par exemple, pour un pourcentage de 20 % de l'ensemble des particules de silicium d'une composition donnée, leur section maximum doit être comprise environ entre 2,2 et 3,2 microns et pour un pourcentage de 80 %, leur section maximum doit être comprise entre environ 8.5 et 11 microns.

Dans certaines compositions, en particulier pour les applications à des fours en matériau de magnésie, on utilise des particules de zircon ou de zirconium métallique qui doivent également respecter une répartition de granulométrie suivant des courbes dites de limite maximum 1 et de limite minimum 1′ : toute composition adaptée aux fours en matériau de magnésie peut donc comprendre du zirconium, dont la répartition des particules doit être telle que toute analyse de granulométrie doit se situer à l'intérieur de ces courbes 1 et 1′. Par exemple, pour un pourcentage de 20 % de l'ensemble de ces particules de zirconium, leur section maximum doit être comprise entre environ 7,5 et 10 microns, pour un pourcentage de 80 % entre environ 17 et 22 microns et pour la totalité, soit 100 % des particules, leur section maximum est comprise entre environ 44 et 56 microns.

La figure 2 représente les courbes limites maximum et minimum de granulométrie des composants réfractaires, tels que :
- pour les particules de carbure de silicium utilisées en particulier pour les fours en magnésie, et pour les particules d'alumine utilisées en particulier pour les fours en silice et en alumine bien sûr, la courbe 4 est dite de limite maximum et la courbe 4′ de limite minimum : toute composition suivant l'invention comportant des particules suivant l'un de cesdits matériaux, doit donc satisfaire à une répartition de ces particules situées à l'intérieur de la surface comprise entre les deux dites courbes. Par exemple, pour un pourcentage de 20 % de ces particules de carbure de silicium et/ou d'alumine, leur section maximum doit être comprise entre environ 200 et 250 microns, pour un pourcentage de 80 % entre environ 850 et 1050 microns et pour la totalité entre environ 1800 et 2200 microns.
- Pour les particules de silice destinées essentiellement aux fours réalisés avec le même matériau en silice, pour les particules de magnésie qui peuvent être utilisées dans tout type de four, et enfin pour les particules de bauxite qui sont utilisées essentiellement dans les fours en magnésie, la courbe 5 est dite de limite maximum et la courbe 5′ de limite minimum : toute composition suivant l'invention incluant des particules de l'un des matériaux cités ci-dessus, doit donc comprendre lesdites particules suivant une répartition située à l'intérieur de la zone limitée par les deux dites courbes. Par exemple, pour un pourcentage de 20 % de ces particules de silice, magnésie et/ou de bauxite, leur section maximum doit être comprise entre 150 et 200 microns environ, pour un pourcentage de 80 % entre 600 et 800 microns environ et pour la totalité ou 100 % de ces particules entre 1300 et 1700 microns environ.

Toute composition suivant l'invention doit de préférence respecter des répartitions de granulométrie pour chacun de ses composants suivant lesdites figures. Par ailleurs, cesdites compositions comprennent des répartitions de constituants suivant la nature des produits à réparer, tels que :
- ceux déjà définis ci-avant en ce qui concerne les produits réfractaires à base de silice, comprennent donc comme constituants oxydables des particules de silicium-métal, d'aluminium métal, et de magnésie considérée en ce cas représentée ici comme étant un produit oxydable et, par ailleurs, en ce qui concerne les constituants réfractaires, des particules d'alumine et de silice. Un exemple de conditionnement pour un sac de 20 kilogrammes a été donné précédemment. De tels fours en matériau de silice peuvent être réparés à des températures de 400°C et il n'est pas recommandé du reste de réparer à une température inférieure, dont le minimum est de toutes façons à 250°C. L'alumine, dans une telle composition, renforce le cordon de silice, et la magnésie apporte un appoint pour l'inflammation du silicium et de l'aluminium, et c'est pour cela que, dans ce cas là, la magnésie est considérée comme un matériau oxydable.
- Pour les fours constitués de produits réfractaires à réparer à base de matériau d'alumine, les constituants oxydables sont constitués en rapport du poids total de la composition de 1 à 10 % de particules de silicium métallique, de 1 à 5 % de particules d'aluminium métallique et de 5 à 15 % de particules de magnésie. Pour ces mêmes fours, les constituants réfractaires desdites compositions nécessaires à la réparation sont constitués en rapport du poids total de la composition, de 1 à 5 % de particules de bauxite et le complément à au moins 70 % par des particules d'alumine. A titre d'exemple, pour ces fours à matériaux d'alumine, on peut citer pour une dose conditionnée de 20 kilogrammes, une composition d'un mélange particulier pour constitution d'une masse de réfractaires pour réparation à chaud en basse température de ces fours , dans lesquels l'intervention doit se faire cependant à plus de 500°C, avec un minimum de 350° , en dessous duquel il n'y aurait plus de soudure. Ladite composition à titre d'exemple peut comprendre :
   - 5 % ou 1 kilog. de particules de silicium-métal,
   - 2,5 % ou 0,5 kilog. de particules d'aluminium-métal,
   - 10 % ou 2 kilog. de particules de magnésie,
   - 2,5 % ou 0,5 kilog. de particules de bauxite,
   - 80 % ou 16 kilog. de particules d'alumine.

Le fait de rajouter dans ce type de mélange de la bauxite d'alumine est rendu nécessaire pour faciliter la combustion de l'alumine, qui est difficile à fondre sans trop augmenter la quantité de silicium-métal, qui est d'un prix assez onéreux. Ainsi, l'ensemble magnésie et bauxite permet une inflammation du mélange plus facilement.

Dans les deux cas de fours en matériau de silice ou en matériau d'alumine, tels que définis ci-dessus, on pourrait remplacer la magnésie par du magnésium métallique mais celui-ci est plus cher, c'est pour ça qu'on se contente de rajouter de la magnésie, à titre donc de produit oxydable et non pas à titre de produit réfractaire.

De même, dans tous les cas, on utilise de l'aluminium-métal et du silicium-métal, mais l'aluminium-métal qui est en fait l'allumette de déclenchement de l'inflammation de la composition, est toujours en quantité plus faible que le silicium-métal qui renforce cet effet d'allumette, en particulier pour des raisons économiques, le prix de l'aluminium étant plus faible par rapport au prix du silicium. L'ensemble des produits oxydables eux-mêmes est limité à 20 %, en poids de la composition comme déjà indiqué précédemment.
- En ce qui concerne la réparation et l'intervention sur des fours constitués de produits réfractaires à base de matériaux de magnésie, les constituants oxydables sont constitués en rapport du poids total de la composition de 1 à 5 % de particules de silicium métallique, de 1 à 5 % de particules d'aluminium métallique, et de 5 à 15 % de zirconium métallique.

En ce qui concerne les constituants réfractaires, ils sont constitués en rapport du poids total de la composition de 1 à 10 % de particules de carbure de silicium et le complément à hauteur minimum 70 % par des particules de bauxite et de magnésie, les particules de bauxite représentant au maximum le même pourcentage que celles de magnésie.

L'opération de réparation a lieu, en général, de préférence à des températures de l'ordre de 800° et pourrait descendre à 400°, mais alors il y a des risques de problèmes de dilatation du produit et des risques de fissures à côté. La famille de ces fours à magnésie est en fait constituée par les fours de type convertisseur, cuves de haut-fourneaux, fours de fusion et fours à verre.

A titre d'exemple, on peut citer, pour une dose conditionnée de 20 kilogrammes, une composition d'un mélange particulier pour constitution d'une masse de réfractaires pour réparation à chaud de ces fours, telle qu'elle comprend :
- 2,5 % ou 0,5 kilog. de particules de silicium,
- 2,5 % ou 0,5 kilog. de particules d'aluminium-métal,
- 10 % ou 2 kilog. de particules de zirconium-métal,
- 5 % ou 1 kilog. de particules de carbure de silicium-métal,
- 40 % ou 8 kilog. de particules de magnésie,
- 40 % ou 8 kilog. de particules de bauxite.

En fait. la répartition à égalité entre la bauxite et la magnésie est à la limite des conditions de répartitions, la bauxite permettant de renforcer la magnésie, qui est fragile. Par ailleurs, le carbure de silicium est nécessaire pour activer la combustion du zirconium.

Toutes les compositions des produits tels que définis ci-dessus en fonction du type de fours à réparer, sont destinées à être projetées sur des surfaces pour former une masse réfractaire, en remplacement du produit d'origine usé ou déterioré, à l'intérieur des fours pouvant rester en fonctionnement de façon à faciliter justement le travail à chaud desdites compositions et donc, sans arrêt des installations.

## Revendications

1. Procédé pour la réparation par soudage sur site de produits réfractaires à base de silice par utilisation d'une composition comprenant des constituants oxydables représentant, en poids, au maximum 30% de celui de ladite composition, et permettant, grâce à tout moyen adapté pour cela, d'enflammer ladite composition projetée contre lesdits produits à réparer, grâce à tout système de projection, et de la porter à une température minimum nécessaire pour l'opération, et des constituants réfractaires compatibles avec lesdits produits à réparer et composés d'au moins en partie de silice, soit de même nature que ces derniers, chaque ensemble de particules d'un même élément desdits constituants de la composition respectant une répartition de granulométrie comprise dans des limites déterminées, caractérisé en ce que :
- on réalise ladite composition avec des particules d'éléments de silicium et d'aluminium métallique qui composent les constituants oxydables telles que pour un pourcentage d'au moins de 80% de l'ensemble de ces particules, leur section maximum est comprise entre 8,5 et 11 microns pour le silicium, et 10,5 à 13,5 microns pour l'aluminium, et lesdits constituants réfractaires comportant au moins des particules d'éléments d'un produit réfractaire différent de la silice ;
- on choisit lesdits constituants oxydables tels qu'ils sont constitués en rapport du poids total de la composition de 10 à 18% de particules de silicium métallique, de 1 à 5% de particules d'aluminium métallique et de 1 à 10% de particules de magnésie.

2. Procédé pour la réparation par soudage sur site de produits réfractaires à base d'alumine par utilisation d'une composition comprenant des constituants oxydables représentant, en poids, au maximum 30% de celui de ladite composition, et permettant, grâce à tout moyen adapté pour cela, d'enflammer ladite composition projetée contre lesdits produits à réparer, grâce à tout système de projection, et de la porter à une température minimum nécessaire pour l'opération, et des constituants réfractaires compatibles avec lesdits produits à réparer et composés d'au moins en partie d'alumine, soit de même nature que ces derniers, chaque ensemble de particules d'un même élément desdits constituants de la composition respectant une répartition de granulométrie comprise dans des limites déterminées, caractérisé en ce que :
- on réalise ladite composition avec des particules d'éléments de silicium et d'aluminium métallique qui composent les constituants oxydables telles que pour un pourcentage d'au moins de 80% de l'ensemble de ces particules, leur section maximum est comprise entre 8,5 et 11 microns pour le silicium et 10,5 à 13,5 microns pour l'aluminium, et lesdits constituants réfractaires comportant au moins des particules d'éléments d'un produit réfractaire différent de l'alumine ;
- on choisit lesdits constituants oxydables tels qu'ils sont constitués en rapport du poids total de la composition de 1 à 10% de particules de silicium métallique, de 1 à 5% de particules d'aluminium métallique et de 5 à 15% de particules de magnésie.

3. Procédé pour la réparation par soudage sur site de produits réfractaires à base de magnésie par utilisation d'une composition comprenant des constituants oxydables représentant, en poids, au maximum 30% de celui de ladite composition, et permettant, grâce à tout moyen adapté pour cela, d'enflammer ladite composition projetée contre lesdits produits à réparer, grâce à tout système de projection, et de la porter à une température minimum nécessaire pour l'opération, et des constituants réfractaires compatibles avec lesdits produits à réparer et composés d'au moins en partie de magnésie, soit de même nature que ces derniers, chaque ensemble de particules d'un même élément desdits constituants de la composition respectant une répartition de granulométrie comprise dans des limites déterminées, caractérisé en ce que :
- on réalise ladite composition avec des particules d'éléments de silicium et d'aluminium métallique qui composent les constituants oxydables telles que pour un pourcentage d'au moins de 80% de l'ensemble de ces particules, leur section maximum est comprise entre 8,5 et 11 microns pour le silicium et 10,5 à 13,5 microns pour l'aluminium, et lesdits constituants réfractaires comportant au moins des particules d'éléments d'un produit réfractaire différent de la magnésie ;
- on choisit lesdits constituants oxydables tels qu'ils sont constitués en rapport du poids total de la composition de 1 à 5% de particules de silicium métallique, de 1 à 5% de particules d'aluminium métallique, et de 5 à 15% de zirconium métallique.

4. Composition pour la réparation par soudage sur site de produits réfractaires à base de silice, laquelle composition comprenant des constituants oxydables représentant, en poids, au maximum 30 % de celui de ladite composition, et des constituants réfractaires à base de silice, soit de même nature que les produits à réparer, chaque ensemble de particules d'un même élément desdits constituants de la composition respectant une répartition de granulométrie comprise dans des limites déterminées, caractérisée en ce que :
- lesdits constituants oxydables sont des particules d'éléments de silicium et d'aluminium métallique, telles que pour un pourcentage d'au moins 80 % de l'ensemble de ces particules, leur section maximum est comprise entre 8,5 et 11 microns pour le silicium, et 10,5 à 13,5 microns pour l'aluminium, et sont au moins constitués en rapport du poids total de la composition de 10 à 18 % de particules de silicium métallique et de 1 à 5 % de particules d'aluminium métallique, et lesdits constituants réfractaires comportent au moins des particules d'éléments d'un produit réfractaire différent de la silice,
- et lesdits constituants réfractaires de cette composition sont constitués en rapport du poids total de la composition de 1 à 5% de particules d'alumine et le complément du pourcentage de ces constituants à hauteur d'au moins 70% par des particules de silice, et lesdits constituants oxydables sont en plus constitués en rapport du poids total de la composition de 1 à 10 % de particules de magnésie.

5. Composition pour la réparation par soudage sur site de produits réfractaires à base d'alumine, laquelle composition comprenant des constituants oxydables représentant, en poids, au maximum 30 % de celui de ladite composition, et des constituants réfractaires à base d'alumine soit de même nature que les produits à réparer, chaque ensemble de particules d'un même élément desdits constituants de la composition respectant une répartition de granulométrie comprise dans des limites déterminées, caractérisée en ce que :
- lesdits constituants oxydables sont des particules d'éléments de silicium et d'aluminium métallique, telles que pour un pourcentage d'au moins 80 % de l'ensemble de ces particules, leur section maximum est comprise entre 8,5 et 11 microns pour la silice, et 10,5 à 13,5 microns pour l'aluminium, et sont au moins constitués en rapport du poids total de la composition de 1 à 10 % de particules de silicium métallique et de 1 à 5 % de particules d'aluminium métallique, et lesdits constituants réfractaires comportent au moins des particules d'éléments d'un produit réfractaire différent de l'alumine,
- et lesdits constituants réfractaires de cette composition sont constitués en rapport du poids total de la composition, de 1 à 5% de particules de bauxite et le complément à au moins 70% par des particules d'alumine, et lesdits constituants oxydables sont en plus constitués en rapport du poids total de la composition de 5 à 15 % de particules de magnésie.

6. Composition pour la réparation par soudage sur site de produits réfractaires à base de magnésie, laquelle composition comprenant des constituants oxydables représentant, en poids, au maximum 30 % de celui de ladite composition et des constituants réfractaires à base de magnésie, soit de même nature que les produits à réparer, chaque ensemble de particules d'un même élément desdits constituants de la composition respectant une répartition de granulométrie comprise dans des limites déterminées, caractérisée en ce que :
- lesdits constituants oxydables sont des particules d'éléments de silicium et d'aluminium métallique, telles que pour un pourcentage d'au moins 80 % de l'ensemble de ces particules, leur section maximum est comprise entre 8,5 et 11 microns pour la silice, et 10,5 à 13,5 microns pour l'aluminium, et sont au moins constitués en rapport du poids total de la composition de 1 à 5 % de particules de silicium métallique et de 1 à 5 % de particules d'aluminium métallique, et lesdits constituants réfractaires comportent au moins des particules d'éléments d'un produit réfractaire différent de la magnésie,
- et lesdits constituants réfractaires de cette composition sont constitués en rapport du poids total de la composition de 1 à 10% de particules de carbure de silicium et le complément à hauteur minimum 70% par des particules de bauxite et de magnésie, les particules de bauxite représentant au maximum le même pourcentage de celles de magnésie, et lesdits constituants oxydables sont en plus constitués en rapport du poids total de la composition de 5 à 15 % de zirconium métallique.

7. Composition pour la réparation par soudage sur site de produits réfractaires suivant l'une quelconque des revendications 4 à 6, caractérisée en ce que les particules de silicium respectent une répartition de granulométrie, telle que pour un pourcentage de 20 % de l'ensemble de ces particules, leur section maximum est comprise entre environ 2,2 et 3,2 microns.

8. Composition pour la réparation par soudage suivant l'une quelconque des revendications 4 à 6, caractérisée en ce que les particules d'aluminium respectent une répartition de granulométrie telle que pour un pourcentage de 20 % de l'ensemble de ces particules, leur section maximum est comprise entre environ 3,4 et 4,8 microns.

## Claims

1. A method of repairing silica-based refractory substances on site by welding using a composition comprising both oxidizable components representing, by weight, no more than 30% of the weight of the composition, and making it possible by any means adapted for that purpose to ignite said composition when sprayed, by any spray system, against said substances to be repaired, and to raise said composition to the minimum temperature required for the operation, and also refractory components compatible with said substances to be repaired and made up, at least in part, of silica, i.e. of the same kind as said substances to be repaired, each set of particles for any one element of said components of the composition complying with a grain size distribution lying within determined limits, the method being characterized in that:
• said composition is made up of particles of metallic aluminum and silicon elements constituting the oxidizable components such that for a percentage of at least 80% of all of said particles, their maximum section lies in the range 8.5 microns to 11 microns for the silicon and in the range 10.5 to 13.5 microns for the aluminum, and said refractory components comprise at least particles of elements of a refractory substance other than silica;
• said oxidizable components are selected so that by weight relative to the total weight of the composition they comprise 10% to 18% particles of metallic silicon, 1% to 5% particles of metallic aluminum and 1% to 10% particles of magnesia.

2. A method of repairing alumina-based refractory substances on site by welding using a composition comprising both oxidizable components representing, by weight, no more than 30% of the weight of the composition, and making it possible by any means adapted for that purpose to ignite said composition when sprayed, by any spray system, against said substances to be repaired, and to raise said composition to the minimum temperature required for the operation, and also refractory components compatible with said substances to be repaired and made up, at least in part, of alumina, i.e. of the same kind as said substances to be repaired, each set of particles for any one element of said components of the composition complying with a grain size distribution lying within determined limits, the method being characterized in that:
• said composition is made up of particles of metallic aluminum and silicon elements constituting the oxidizable components such that for a percentage of at least 80% of all of said particles, their maximum section lies in the range 8.5 microns to 11 microns for the silicon and in the range 10.5 to 13.5 microns for the aluminum, and said refractory components comprise at least particles of elements of a refractory substance other than alumina;
• said oxidizable components are selected so that by weight relative to the total weight of the composition they comprise 1% to 10% particles of metallic silicon, 1% to 5% particles of metallic aluminum and 5% to 15% particles of magnesia.

3. A method of repairing magnesia-based refractory substances on site by welding using a composition comprising both oxidizable components representing, by weight, no more than 30% of the weight of the composition, and making it possible by any means adapted for that purpose to ignite said composition when sprayed, by any spray system, against said substances to be repaired, and to raise said composition to the minimum temperature required for the operation, and also refractory components compatible with said substances to be repaired and made up, at least in part, of magnesia, i.e. of the same kind as said substances to be repaired, each set of particles for any one element of said components of the composition complying with a grain size distribution lying within determined limits, the method being characterized in that:
• said composition is made up of particles of metallic aluminum and silicon elements constituting the oxidizable components such that for a percentage of at least 80% of all of said particles, their maximum section lies in the range 8.5 microns to 11 microns for the silicon and in the range 10.5 to 13.5 microns for the aluminum, and said refractory components comprise at least particles of elements of a refractory substance other than magnesia;
• said oxidizable components are selected so that by weight relative to the total weight of the composition they comprise 1% to 5% particles of metallic silicon, 1% to 5% particles of metallic aluminum and 5% to 15% of metallic zirconium.

4. A composition for repairing silica-based refractory substances on site by welding, which composition comprising both oxidizable components representing, by weight, no more than 30% of the weight of the composition, and refractory components based on silica, i.e. of the same kind as the substances to be repaired, each set of particles for any one element of said components of the composition complying with a grain size distribution lying within determined limits, the composition being characterized in that:
• said oxidizable components are particles of metallic aluminum and silicon elements such that for a percentage of at least 80% of all of said particles, their maximum section lies in the range 8.5 microns to 11 microns for the silicon and in the range 10.5 to 13.5 microns for the aluminum, and are at least constituted relative to the total weight of the composition by 10% to 18% particles of metallic silicon, and 1% to 5% particles of metallic aluminum, and said refractory components comprise at least particles of elements of a refractory substance other than silica; and
• said refractory components of said composition are constituted relative to the total weight of the composition by 1% to 5% of alumina particles with the remaining percentage of said components up to at least 70% being constituted by particles of silica, and said oxidizable components are also constituted relative to the total weight of the composition by 1% to 10% of magnesia particles.

5. A composition for repairing alumina-based refractory substances on site by welding,which composition comprising both oxidizable components representing, by weight, no more than 30% of the weight of the composition, and refractory components based on alumina, i.e. of the same kind as the substances to be repaired, each set of particles for any one element of said components of the composition complying with a grain size distribution lying within determined limits, the composition being characterized in that:
• said oxidizable components are particles of metallic aluminum and silicon elements such that for a percentage of at least 80% of all of said particles, their maximum section lies in the range 8.5 microns to 11 microns for the silicon and in the range 10.5 to 13.5 microns for the aluminum, and are at least constituted relative to the total weight of the composition by 1% to 10% particles of metallic silicon, and 1% to 5% particles of metallic aluminum, and said refractory components comprise at least, particles of elements of a refractory substance other than alumina; and
• said refractory components of said composition are constituted relative to the total weight of the composition by 1% to 5% of bauxite particles with the remainder up to at least 70% being constituted by particles of alumina, and said oxidizable components are also constituted relative to the total weight of the composition by 5% to 15% of magnesia particles.

6. A composition for repairing magnesia-based refractory substances on site by welding,which composition comprising both oxidizable components representing, by weight, no more than 30% of the weight of the composition, and refractory components based on magnesia, i.e. of the same kind as the substances to be repaired, each set of particles for any one element of said components of the composition complying with a grain size distribution lying within determined limits, the composition being characterized in that:
• said oxidizable components are particles of metallic aluminum and silicon elements such that for a percentage of at least 80% of all of said particles, their maximum section lies in the range 8.5 microns to 11 microns for the silicon and in the range 10.5 to 13.5 microns for the aluminum, and are at least constituted relative to the total weight of the composition by 1% to 5% particles of metallic silicon, and 1% to 5% particles of metallic aluminum, and said refractory components comprise at least particles of elements of a refractory substance other than magnesia; and
• said refractory components of said composition are constituted relative to the total weight of the composition by 1% to 10% particles of silicon carbide with the remainder up to a minimum of 70% being constituted by particles of bauxite and magnesia, the bauxite particles representing at the maximum the same percentage as that of magnesia, and said oxidizable components are also constituted relative to the total weight of the composition by 5% to 15% of metallic zirconium.

7. A composition for repairing refractory substances on site by welding according to any one of claims 4 to 6, characterized in that the particles of silicon have a grain size distribution such that for 20% of all of said particles, their maximum section lies in the range about 2.2 to 3.2 microns.

8. A composition for repairing by welding according to any one of claims 4 to 6, characterized in that the particles of aluminum comply with a grain size distribution such that for 20% of all of said particles, their maximum section lies in the range about 3.4 to 4.8 microns.

## Patentansprüche

1. Verfahren zum In-situ-Ausbessern von feuerfesten Formkörpern auf Siliziumdioxidbasis durch Schweißen unter Verwendung einer Zusammensetzung, die oxidierbare Bestandteile, die gewichtsmäßig maximal 30 % der Zusammensetzung darstellen und dank jedem hierfür geeigneten Mittel ermöglichen, diese Zusammensetzung zu entflammen, die dank jedem Spritzsystem gegen die auszubessernden Formkörper gespritzt wird, und sie auf eine für den Vorgang erforderliche Mindesttemperatur zu bringen, und feuerfeste Bestandteile aufweist, die mit den auszubessernden Formkörpern kompatibel und wenigstens teilweise aus Siliziumdioxid zusammengesetzt oder von gleicher Art wie diese letzteren sind, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- man diese Zusammensetzung mit Elemententeilchen metallischen Siliziums und Aluminiums, die die oxidierbaren Bestandteile derart bilden, daß für einen Prozentsatz von wenigstens 80 % der Gesamtheit dieser Teilchen ihre Maximalabmessung von 8,5 bis 11 µm für das Silizium und von 10,5 bis 13,5 µm für das Aluminium beträgt und mit den feuerfesten Bestandteilen herstellt, die wenigstens Teilchen von Elementen eines vom Siliziumoxid verschiedenen feuerfesten Stoffes aufweisen; und
- man die oxidierbaren Bestandteile derart wählt, daß sie im Verhältnis zum Gesamtgewicht der Zusammensetzung aus 10 bis 18 % Teilchen metallischen Siliziums, 1 bis 5 % Teilchen metallischen Aluminiums und 1 bis 10 % Magnesiumoxidteilchen bestehen.

2. Verfahren zum In-situ-Ausbessern von feuerfesten Formkörpern auf Aluminiumoxidbasis durch Schweißen unter Verwendung einer Zusammensetzung, die oxidierbare Bestandteile, die gewichtsmäßig maximal 30 % der Zusammensetzung darstellen und dank jedem hierfür geeigneten Mittel ermöglichen, diese Zusammensetzung zu entflammen, die dank jedem Spritzsystem gegen die auszubessernden Formkörper gespritzt wird, und sie auf eine für den Vorgang erforderliche Mindesttemperatur zu bringen, und feuerfeste Bestandteile aufweist, die mit den auszubessernden Formkörpern kompatibel und wenigstens teilweise aus Aluminiumoxid zusammengesetzt oder von gleicher Art wie diese letzteren sind, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- man diese Zusammensetzung mit Elemententeilchen metallischen Siliziums und Aluminiums, die die oxidierbaren Bestandteile derart bilden, daß für einen Prozentsatz von wenigstens 80 % der Gesamtheit dieser Teilchen ihre Maximalabmessung von 8,5 bis 11 µm für das Silizium und von 10,5 bis 13,5 µm für das Aluminium beträgt und mit den feuerfesten Bestandteilen herstellt, die wenigstens Teilchen von Elementen eines vom Aluminiumoxid verschiedenen feuerfesten Stoffes aufweisen; und
- man die oxidierbaren Bestandteile derart wählt, daß sie im Verhältnis zum Gesamtgewicht der Zusammensetzung aus 1 bis 10 % Teilchen metallischen Siliziums, 1 bis 5 % Teilchen metallischen Aluminiums und 5 bis 15 % Magnesiumoxidteilchen bestehen.

3. Verfahren zum In-situ-Ausbessern von feuerfesten Formkörpern auf Magnesiumoxidbasis durch Schweißen unter Verwendung einer Zusammensetzung, die oxidierbare Bestandteile, die gewichtsmäßig maximal 30 % der Zusammensetzung darstellen und dank jedem hierfür geeigneten Mittel ermöglichen, diese Zusammensetzung zu entflammen, die dank jedem Spritzsystem gegen die auszubessernden Formkörper gespritzt wird, und sie auf eine für den Vorgang erforderliche Mindesttemperatur zu bringen, und feuerfeste Bestandteile aufweist, die mit den auszubessernden Formkörpern kompatibel und wenigstens teilweise aus Magnesiumoxid zusammengesetzt oder von gleicher Art wie diese letzteren sind, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- man diese Zusammensetzung mit Elemententeilchen metallischen Siliziums und Aluminiums, die die oxidierbaren Bestandteile derart bilden, daß für einen Prozentsatz von wenigstens 80 % der Gesamtheit dieser Teilchen ihre Maximalabmessung von 8,5 bis 11 µm für das Silizium und von 10,5 bis 13,5 µm für das Aluminium beträgt und mit den feuerfesten Bestandteilen herstellt, die wenigstens Teilchen von Elementen eines vom Magnesiumoxid verschiedenen feuerfesten Stoffes aufweisen; und
- man die oxidierbaren Bestandteile derart wählt, daß sie im Verhältnis zum Gesamtgewicht der Zusammensetzung aus 1 bis 5 % Teilchen metallischen Siliziums, 1 bis 5 % Teilchen metallischen Aluminiums und 5 bis 15 % metallischen Zirkoniums bestehen.

4. Zusammensetzung zum In-situ-Ausbessern von feuerfesten Formkörpern auf Siliziumdioxidbasis durch Schweißen, welche Zusammensetzung oxidierbare Bestandteile, die gewichtsmäßig maximal 30 % der Zusammensetzung darstellen, und feuerfeste Bestandteile auf Siliziumdioxidbasis, ggf. der gleichen Art wie die auszubessernden Formkörper, aufweist, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- die oxidierbaren Bestandteile Elemententeilchen metallischen Siliziums und Aluminiums derart sind, daß für einen Prozentsatz von wenigstens 80 % der Gesamtheit dieser Teilchen ihre Maximalabmessung von 8,5 bis 11 µm für das Silizium und 10,5 bis 13,5 µm für das Aluminium beträgt, und sie im Verhältnis zum Gesamtgewicht der Zusammensetzung wenigstens aus 10 bis 18 % Teilchen metallischen Siliziums und 1 bis 5 % Teilchen metallischen Aluminiums bestehen und die feuerfesten Bestandteile wenigstens Elemententeilchen eines vom Siliziumdioxid verschiedenen feuerfesten Stoffes aufweisen, und
- die feuerfesten Bestandteile dieser Zusammensetzung im Verhältnis zum Gesamtgewicht der Zusammensetzung aus 1 bis 5 % Aluminiumoxidteilchen und dem Rest des Prozentsatzes dieser Bestandteile zur Höhe von wenigstens 70 % aus Siliziumdioxidteilchen bestehen und die oxidierbaren Bestandteile im Verhältnis zum Gesamtgewicht der Zusammensetzung zusätzlich aus 1 bis 10 % Magnesiumoxidteilchen bestehen.

5. Zusammensetzung zum In-situ-Ausbessern von feuerfesten Formkörpern auf Aluminiumoxidbasis durch Schweißen, welche Zusammensetzung oxidierbare Bestandteile, die gewichtsmäßig maximal 30 % der Zusammensetzung darstellen, und feuerfeste Bestandteile auf Aluminiumoxidbasis, ggf. der gleichen Art wie die auszubessernden Formkörper, aufweist, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- die oxidierbaren Bestandteile Elemententeilchen metallischen Siliziums und Aluminiums derart sind, daß für einen Prozentsatz von wenigstens 80 % der Gesamtheit dieser Teilchen ihre Maximalabmessung von 8,5 bis 11 µm für das Silizium und 10,5 bis 13,5 µm für das Aluminium beträgt, und sie im Verhältnis zum Gesamtgewicht der Zusammensetzung wenigstens aus 1 bis 10 % Teilchen metallischen Siliziums und 1 bis 5 % Teilchen metallischen Aluminiums bestehen und die feuerfesten Bestandteile wenigstens Elemententeilchen eines vom Aluminiumoxid verschiedenen feuerfesten Stoffes aufweisen, und
- die feuerfesten Bestandteile dieser Zusammensetzung im Verhältnis zum Gesamtgewicht der Zusammensetzung aus 1 bis 5 % Bauxitteilchen und dem Rest zur Höhe von wenigstens 70 % aus Aluminiumoxidteilchen bestehen und die oxidierbaren Bestandteile im Verhältnis zum Gesamtgewicht der Zusammensetzung zusätzlich aus 5 bis 15 % Magnesiumoxidteilchen bestehen.

6. Zusammensetzung zum In-situ-Ausbessern von feuerfesten Formkörpern auf Magnesiumoxidbasis durch Schweißen, welche Zusammensetzung oxidierbare Bestandteile, die gewichtsmäßig maximal 30 % der Zusammensetzung darstellen, und feuerfeste Bestandteile auf Magnesiumoxidbasis, ggf. der gleichen Art wie die auszubessernden Formkörper aufweist, wobei jede Gruppe von Teilchen eines gleichen Elements der Bestandteile der Zusammensetzung eine Korngrößenverteilung einhält, die in bestimmten Grenzen liegt,
dadurch gekennzeichnet, daß
- die oxidierbaren Bestandteile Elemententeilchen metallischen Siliziums und Aluminiums derart sind, daß für einen Prozentsatz von wenigstens 80 % der Gesamtheit dieser Teilchen ihre Maximalabmessung von 8,5 bis 11 µm für das Silizium und 10,5 bis 13,5 µm für das Aluminium beträgt, und sie im Verhältnis zum Gesamtgewicht der Zusammensetzung wenigstens aus 1 bis 5 % Teilchen metallischen Siliziums und 1 bis 5 % Teilchen metallischen Aluminiums bestehen und die feuerfesten Bestandteile wenigstens Elemententeilchen eines vom Magnesiumoxid verschiedenen feuerfesten Stoffes aufweisen, und
- die feuerfesten Bestandteile dieser Zusammensetzung im Verhältnis zum Gesamtgewicht der Zusammensetzung aus 1 bis 10 % Siliziumkarbidteilchen und dem Rest zur Höhe von wenigstens 70 % aus Bauxit- und Magnesiumoxidteilchen bestehen, wobei die Bauxitteilchen höchstens den gleichen Prozentsatz wie die aus Magnesiumoxid darstellen, und die oxidierbaren Bestandteile im Verhältnis zum Gesamtgewicht der Zusammensetzung zusätzlich aus 5 bis 15 % metallischem Zirkonium bestehen.

7. Zusammensetzung zum In-situ-Ausbessern von feuerfesten Formkörpern durch Schweißen nach irgendeinem der Ansprüche 4 bis 6,
dadurch gekennzeichnet, daß
die Siliziumteilchen eine solche Korngrößenverteilung einhalten, daß für einen Prozentsatz von 20 % der Gesamtheit dieser Teilchen ihre Maximalabmessung etwa 2,2 bis 3,2 µm beträgt.

8. Zusammensetzung zum Ausbessern durch Schweißen nach irgendeinem der Ansprüche 4 bis 6, dadurch gekennzeichnet, daß die Aluminiumteilchen eine solche Korngrößenverteilung einhalten, daß für einen Prozentsatz von 20 % der Gesamtheit dieser Teilchen ihre Maximalabmessung etwa 3,4 bis 4,8 µm beträgt.
